(19) Europäisches Patentamt
European Patent Office
Office européen des brevets

(11) **EP 3 476 037 B1**

(12) **FASCICULE DE BREVET EUROPEEN**

(45) Date de publication et mention de la délivrance du brevet:
**25.01.2023 Bulletin 2023/04**

(21) Numéro de dépôt: **17742807.5**

(22) Date de dépôt: **20.06.2017**

(51) Classification Internationale des Brevets (IPC):
*H02P 21/00* (2016.01)     *H02P 21/28* (2016.01)

(52) Classification Coopérative des Brevets (CPC):
**H02P 21/0003; H02P 21/28**

(86) Numéro de dépôt international:
**PCT/FR2017/051635**

(87) Numéro de publication internationale:
**WO 2017/220924 (28.12.2017 Gazette 2017/52)**

(54) **PROCÉDÉ D'ESTIMATION DE LA POSITION ET DE LA VITESSE DU ROTOR D'UNE MACHINE À COURANT ALTERNATIF POUR VÉHICULE AUTOMOBILE ET SYSTÈME CORRESPONDANT**

VERFAHREN ZUM SCHÄTZEN DER POSITION UND GESCHWINDIGKEIT DES ROTORS EINER WECHSELSTROMMASCHINE FÜR EIN KRAFTFAHRZEUG UND ENTSPRECHENDES SYSTEM

METHOD FOR ESTIMATING THE POSITION AND SPEED OF THE ROTOR OF AN ALTERNATING CURRENT MACHINE FOR A MOTOR VEHICLE, AND CORRESPONDING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2016 FR 1655822**

(43) Date de publication de la demande:
**01.05.2019 Bulletin 2019/18**

(73) Titulaires:
• **Renault s.a.s**
  **92100 Boulogne Billancourt (FR)**
• **Nissan Motor Co., Ltd.**
  **Yokohama-shi, Kanagawa 221-0023 (JP)**

(72) Inventeurs:
• **KOTEICH, Mohamad**
  **91440 Bures sur Yvette (FR)**
• **MALOUM, Abdelmalek**
  **94550 Chevilly la rue (FR)**

(74) Mandataire: **Renault Group**
  **Renault s.a.s.**
  **API : TCR GRA 2 36**
  **1, Avenue du Golf**
  **78084 Guyancourt Cedex (FR)**

(56) Documents cités:
| EP-A1- 3 012 962 | WO-A2-2015/166173 |
| CN-B- 102 437 813 | CN-B- 102 983 806 |
| US-A1- 2007 194 742 | US-A1- 2013 289 934 |

EP 3 476 037 B1

**Description**

L'invention a pour domaine technique la commande de machines électriques pour véhicule automobile, et plus particulièrement l'estimation de grandeurs intervenant dans de telles commandes.

Les stratégies de commande avancée des machines électriques nécessitent une connaissance précise de la position et/ou de la vitesse du rotor. Ces grandeurs mécaniques sont traditionnellement mesurées.

Avec une telle structure de commande, les performances dynamiques des machines à courant alternatif sont meilleures que celles des machines à courant continu. En revanche, des calculateurs numériques performants, des composants de puissance à fréquence de commutation élevée et certains capteurs supplémentaires branchés sur l'arbre moteur relié au rotor sont requis pour une telle commande avancée.

L'utilisation des capteurs mécaniques, pour mesurer la position et/ou la vitesse du rotor, dans une structure de commande des machines électriques engendre plusieurs contraintes, parmi lesquelles on peut citer le coût supplémentaire des capteurs et de leurs électroniques associées, l'encombrement dû à l'installation des capteurs et à leur câblage, la sensibilité des capteurs à leur environnement (température, bruits, oscillations mécaniques, compatibilité électromagnétique, etc.) et la possibilité de défaillance d'un capteur ou d'une de ses connexions, ce qui réduit la fiabilité du système.

Ces contraintes limitent l'utilisation des capteurs, voire la rendent impossible, dans certaines applications. Pour cela, on cherche à remplacer les capteurs mécaniques qui mesurent la position et la vitesse angulaire du rotor par des algorithmes d'estimation qui estiment ces grandeurs en utilisant les mesures des courants et des tensions.

De l'état de la technique, on connaît les documents suivants.

Le document US 2013/0289934A1 décrit un procédé pour estimer le flux du stator à partir des signaux de la tension et des courants de la machine, servant ensuite à estimer le flux rotorique de la machine à partir du flux statorique. Le procédé comprend aussi la détermination de l'angle électrique et sa dérivée. Ce procédé s'applique uniquement à des machines asynchrones et n'est pas transposable aux machines à rotor bobiné.

Le document US 2007/0194742A1 décrit l'estimation du flux sans impliquer un observateur au sens propre du terme mais plutôt avec des signaux sinusoïdaux décalés.

Le document CN102983806 décrit une simple technique d'estimation du flux statorique.

Le document CN102437813 décrit une méthode pour remonter à l'angle et à la vitesse du rotor à partir du flux rotorique, pour une machine synchrone à aimant permanent. Par ailleurs, l'enseignement du document implique une utilisation extensive du filtrage physique au travers d'une extraction de la fondamentale de la tension et courant du rotor.

Le document EP3012962 décrit un procédé d'estimation de la position pour la machine synchrone à rotor bobiné, à partir de l'estimation des flux. Dans ce procédé il est nécessaire de connaître les inductances de phases et les inductances mutuelles entre le stator et le rotor.

Il existe un besoin pour un procédé de commande d'une machine électrique amélioré par rapport aux procédés existants, pouvant être appliqués à tout type de machines à courant alternatif (synchrones et asynchrones), et pouvant présenter une plus grande robustesse vis-à-vis des paramètres de la machine et vis-à-vis des bruits de mesures.

L'invention a pour objet un procédé selon la revendication 1 et un système selon la revendication 5. Les revendications dépendantes représentent des modes préférentiels de l'invention.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principales étapes d'un procédé d'estimation selon l'invention, et
- la figure 2 illustre les principaux éléments d'un système d'estimation selon l'invention.

Les principes mathématiques et physiques permettant la détermination de la position et de la vitesse du rotor d'une machine électrique vont maintenant être décrits.

On mesure les courants statoriques $i_a$, $i_b$ et $i_c$. Les tensions $v_a$, $v_b$ et $v_c$ sont connues au niveau de la commande.

A partir des tensions triphasées $v_a$, $v_b$, $v_c$ on calcule les tensions diphasées $v_\alpha$, $v_\beta$ par application de l'équation suivante.

$$\begin{bmatrix} v_{\alpha(k)} \\ v_{\beta(k)} \end{bmatrix} = \sqrt{\frac{2}{3}} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} v_{a(k)} \\ v_{b(k)} \\ v_{c(k)} \end{bmatrix}$$

$$(Eq. 1)$$

Dans le cas d'une machine polyphasée, la projection dans un repère diphasé fait partie de l'état de l'art connu de l'homme de métier.

A partir des courants triphasés $i_a$, $i_b$, $i_c$, on calcule les courants diphasés $i_\alpha$,$i_\beta$ par application de l'équation suivante.

$$\begin{bmatrix} i_{\alpha(k)} \\ i_{\beta(k)} \end{bmatrix} = \sqrt{\frac{2}{3}} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} i_{a(k)} \\ i_{b(k)} \\ i_{c(k)} \end{bmatrix} \qquad (Eq.\ 2)$$

Il est à noter que ces transformations sont généralement connues comme des transformations de Concordia d'un repère triphasé solidaire du stator vers un repère diphasé solidaire du stator également.

La vitesse $\omega(k)$ à l'instant k est calculée d'une manière itérative, suivant l'algorithme suivante :

$$\phi_{(0)} = 0$$

$$\omega_{(0)} = 0$$

$$\phi_{(k)} = \phi_{(k-1)} + T_s \left( \omega_{(k-1)} + m_\phi \left( v_{\alpha(k-1)} \sin \phi_{(k-1)} - v_{\beta(k-1)} \cos \phi_{(k-1)} \right) \right)$$

$$\omega_{(k)} = \omega_{(k-1)} + m_\omega T_s \left( v_{\alpha(k)} \sin \phi_{(k)} - v_{\beta(k)} \cos \phi_{(k)} \right) \qquad (Eq.\ 3)$$

Avec :

$m_\phi$ et $m_\omega$ : paramètres de réglage
$T_s$ : le pas d'échantillonnage, et
$\Phi(0)$ : une variable permettant d'estimer la vitesse (initialisée à zéro).

L'équation (Eq. 3) assure une estimation de la vitesse qui peut être réglée par les paramètres $m_\phi$ et $m_\omega$. Si les valeurs de ces paramètres sont élevées, l'estimation est plus rapide mais bruitée. Si ces valeurs sont faibles, l'estimation converge moins rapidement, mais avec moins de bruit aussi.

On définit les deux quantités $e_{\alpha(k)}$ et $e_{\beta(k)}$ par les équations suivantes :

$$e_{\alpha(k)} = v_{\alpha(k)} - R_s i_{\alpha(k)} + m_\alpha . S_{\omega(k)} \left( v_{\beta(k)} - R_s i_{\beta(k)} \right)$$

$$e_{\beta(k)} = v_{\beta(k)} - R_s i_{\beta(k)} - m_\beta . S_{\omega(k)} \left( v_{\alpha(k)} - R_s i_{\alpha(k)} \right) \qquad (Eq.\ 4)$$

Avec :

$$S_{\omega(k)} = 1 \qquad \underline{si} \qquad \omega_{(k)} > 0$$

$$S_{\omega(k)} = 0 \qquad \underline{si} \qquad \omega_{(k)} = 0$$

$$S_{\omega(k)} = -1 \qquad \underline{si} \qquad \omega_{(k)} < 0$$

$$0 < m_\alpha, m_\beta < 1 \qquad (Eq.\ 5)$$

$R_s$ : la résistance statorique.

Généralement, on choisit les valeurs suivantes pour les deux quantités $e_{\alpha(k)}$ et $e_{\beta(k)}$ :

$$m_\alpha = m_\beta = 0.3 \qquad (Eq.\ 6)$$

Les flux statoriques $\hat{\psi}_{\alpha(k)}, \hat{\psi}_{\beta(k)}$ dans le repère diphasique sont estimés à partir des équations suivantes :

$$\hat{\psi}_{\alpha(k)} = \hat{\psi}_{\alpha(k-1)} + \frac{T_s}{2}\left(e_{\alpha(k)} + e_{\alpha(k-1)}\right) - m_\alpha . S_{\omega(k)} . \omega_{(k)} . \frac{T_s}{2}\left(\hat{\psi}_{\alpha(k)} + \hat{\psi}_{\alpha(k-1)}\right)$$

$$\hat{\psi}_{\beta(k)} = \hat{\psi}_{\beta(k-1)} + \frac{T_s}{2}\left(e_{\beta(k)} + e_{\beta(k-1)}\right) - m_\beta . S_{\omega(k)} . \omega_{(k)} . \frac{T_s}{2}\left(\hat{\psi}_{\beta(k)} + \hat{\psi}_{\beta(k-1)}\right)$$

$$(Eq. \ 7)$$

En utilisant l'équation (Eq. 7), on assure que l'estimation des flux est robuste vis-à-vis des bruits et écarts produits par les capteurs. Les paramètres $m_\alpha$ et $m_\beta$ sont choisis de manière à assurer la rapidité de convergence et le rejet des perturbations (bruits, écarts etc.). Si ces deux paramètres sont à zéro, aucun filtrage des perturbations n'est effectué et l'estimation risque de ne pas converger. S'ils sont à 1, on assure un bon filtrage et rejet de perturbation mais au risque de voir apparaître une erreur statique.

Les valeurs comprises entre 0.2 et 0.7 assurent une bonne qualité d'estimation.

Par ailleurs, l'équation (Eq. 7) est plus stable que l'estimation proposée dans l'état de la technique antérieure.

La position $\hat{\theta}_{(k)}$ est estimée à partir des flux estimés par application de l'équation suivante :

$$\hat{\theta}_{(k)} = \text{atan}\left(\frac{\hat{\psi}_{\beta(k)} - L_{eq} i_{\beta(k)}}{\hat{\psi}_{\alpha(k)} - L_{eq} i_{\alpha(k)}}\right)$$

$$(Eq. \ 8)$$

Pour les machines synchrones, on remplace l'inductance équivalente $L_{eq}$ par la composante quadratique de l'inductance du stator ($L_q$)

$$L_{eq} = L_q$$

$$(Eq. \ 9)$$

Pour les machines asynchrones, on remplace l'inductance équivalente $L_{eq}$ par l'inductance transitoire du stator :

$$L_{eq} = L_s - \frac{M^2}{L_s L_r}$$

$$(Eq. \ 10)$$

avec :

$L_s$ : l'inductance statorique,
$L_r$ : l'inductance rotorique et
M : l'inductance mutuelle entre stator et rotor dans une machine asynchrone.

Le couple électromagnétique $C_{m(k)}$ peut être estimé à partir des flux estimés et des courants par application de l'équation suivante:

$$C_{m(k)} = \hat{\psi}_{\alpha(k)} i_{\beta(k)} - \hat{\psi}_{\beta(k)} i_{\alpha(k)}$$

$$(Eq. \ 11)$$

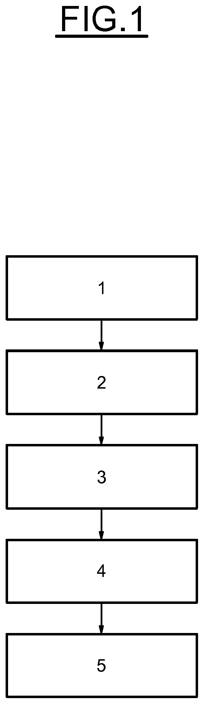

On va maintenant décrire les principales étapes d'un procédé d'estimation de la position et de la vitesse du rotor d'une machine à courant alternatif, à partir de la connaissance des courants statoriques ($i_a, i_b, i_c$), des tensions statoriques ($v_a, v_b, v_c$), de la résistance statorique et de l'inductance équivalente $L_{eq}$. Ces étapes sont illustrées par la figure 1.

Au cours d'une première étape 1, on détermine les courants statoriques et les tensions statoriques dans le repère triphasé. Il est à noter que les tensions statoriques peuvent être reçues directement d'un moyen de commande de la machine électrique.

Au cours d'une deuxième étape 2, on détermine les composantes des courants statoriques dans un repère diphasé en fonction des courants statoriques dans le repère triphasé par application de l'équation 1 et on détermine les composantes des tensions statoriques dans le repère diphasé en fonction des tensions statoriques dans le repère triphasé par application de l'équation 2.

Au cours d'une troisième étape 3, on détermine la vitesse du rotor en fonction des tensions statoriques dans le repère diphasé par application de l'équation Eq. 3.

Au cours d'une quatrième étape 4, on détermine les flux statoriques dans le repère diphasé en fonction de la vitesse du rotor, de la résistance statorique, et des courants et tensions statoriques dans le repère diphasé par application de l'équation Eq. 7 en combinaison avec les équations Eq. 4 à Eq. 6. Cette estimation permet de rejeter les bruits de mesure et les écarts au niveau des capteurs de courants, à travers les deux paramètres définis par l'équation Eq. 4. Cette estimation est indépendante du type de la machine utilisée.

Au cours d'une cinquième étape 5, on détermine la position du rotor en fonction des flux statoriques dans le repère diphasé, des courants statoriques dans le repère diphasé et de l'inductance équivalente par application de l'équation Eq. 8

Si la machine électrique est de type synchrone, on fixe l'inductance équivalente égale à la composante quadratique de l'inductance du stator.

Si la machine électrique est de type asynchrone, on détermine l'inductance équivalente en fonction de l'inductance mutuelle, de l'inductance statorique et de l'inductance rotorique par application de l'équation Eq. 10.

Enfin, on détermine le couple électromagnétique en fonction des flux statoriques dans le repère diphasé et des courants statoriques dans le repère diphasé par application de l'équation Eq. 11.

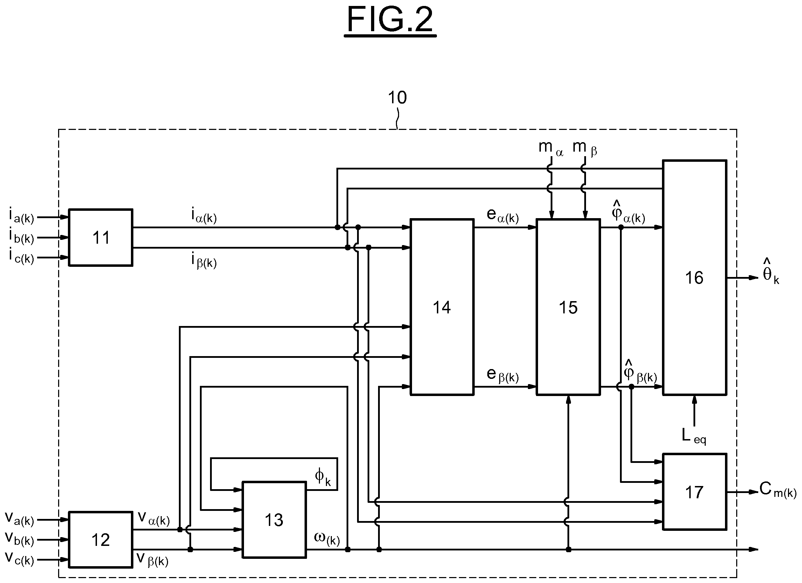

On va maintenant décrire les principaux éléments d'un système d'estimation de la position et de la vitesse du rotor d'une machine à courant alternatif, à partir de la connaissance des courants statoriques ($i_a, i_b, i_c$), des tensions statoriques ($v_a, v_b, v_c$), de la résistance statorique et de l'inductance équivalente $L_{eq}$. Ces éléments sont illustrés par la figure 2.

Un premier moyen de détermination 11 détermine les composantes des courants statoriques dans un repère diphasé en fonction des courants statoriques dans le repère triphasé par application de l'équation 1.

Un deuxième moyen de détermination 12 détermine les composantes des tensions statoriques dans le repère diphasé en fonction des tensions statoriques dans le repère triphasé par application de l'équation 2.

Un troisième moyen de détermination 13 détermine par itération la vitesse du rotor en fonction des tensions statoriques dans le repère diphasé par application de l'équation Eq. 3.

Un moyen d'estimation 15 estime les flux statoriques dans le repère diphasé en fonction de la vitesse du rotor, de la résistance statorique, et des courants et tensions statoriques dans le repère diphasé par application de l'équation Eq. 7 en combinaison avec les équations Eq. 4 à Eq. 6. Plus précisément, un quatrième moyen de détermination 14 détermine des paramètres de rejet des bruits de mesure et des écarts en fonction des courants statoriques dans le repère diphasique, des tensions statoriques dans le repère diphasique, de la résistance statorique et de la vitesse de rotation du rotor par application des équations Eq. 4 à Eq.6, et le moyen d'estimation 15 estime les flux statoriques en fonction des paramètres de rejet déterminés par le quatrième moyen de détermination, et en fonction de la vitesse du rotor déterminée par le troisième moyen

Un cinquième moyen de détermination 16 détermine la position du rotor en fonction des flux statoriques dans le repère diphasé, des courants statoriques dans le repère diphasé et de l'inductance équivalente par application de l'équation Eq. 8.

Si la machine électrique est de type synchrone, on fixe l'inductance équivalente égale à la composante quadratique de l'inductance du stator.

Si la machine électrique est de type asynchrone, un moyen de détermination non illustré sur la figure 2 détermine l'inductance équivalente en fonction de l'inductance mutuelle, de l'inductance statorique et de l'inductance rotorique par application de l'équation Eq. 10.

Enfin, un sixième moyen de détermination 17 détermine également le couple électromagnétique en fonction des flux statoriques dans le repère diphasé et des courants statoriques dans le repère diphasé par application de l'équation Eq. 11.

**Revendications**

**1.** Procédé d'estimation de la position et de la vitesse du rotor d'une machine à courant alternatif pour véhicule automobile comprenant les étapes suivantes :

on mesure les courants statoriques de la machine dans le repère triphasé et les valeurs des tensions statoriques de la machine dans le repère triphasé,
on détermine des composantes des courants statoriques dans un repère diphasé en fonction des courants statoriques dans le repère triphasé par transformation de Concordia,
on détermine des composantes des tensions statoriques dans le repère diphasé en fonction des tensions statoriques dans le repère triphasé par transformation de Concordia,
on détermine la vitesse du rotor de façon itérative en fonction des tensions statoriques dans le repère diphasé et de paramètres de réglage,
on détermine les flux statoriques de la machine dans le repère diphasé en fonction de la vitesse du rotor et de paramètres de rejet, et
on détermine la position du rotor en fonction des flux statoriques dans le repère diphasé, des courants statoriques dans le repère diphasé et de l'inductance équivalente.

2. Procédé d'estimation selon la revendication 1, dans lequel, lorsque la machine électrique est de type synchrone, on fixe l'inductance équivalente égale à la composante quadratique de l'inductance du stator.

3. Procédé d'estimation selon la revendication 1, dans lequel, lorsque la machine électrique est de type asynchrone, on détermine l'inductance équivalente en fonction de l'inductance mutuelle, de l'inductance statorique et de l'inductance rotorique.

4. Procédé d'estimation selon l'une quelconque des revendications précédentes, dans lequel on détermine le couple électromagnétique en fonction des flux statoriques dans le repère diphasé et des courants statoriques dans le repère diphasé.

5. Système d'estimation de la position et de la vitesse du rotor d'une machine à courant alternatif pour véhicule automobile, comprenant

un premier moyen de détermination (11) des composantes des courants statoriques dans un repère diphasé en fonction des courants statoriques dans le repère triphasé par transformation de Concordia,
un deuxième moyen de détermination (12) des composantes des tensions statoriques dans le repère diphasé en fonction des tensions statoriques dans le repère triphasé par transformation de Concordia,
un troisième moyen de détermination (13) par itération de la vitesse du rotor en fonction des tensions statoriques dans le repère diphasé,
un moyen d'estimation (15) des flux statoriques dans le repère diphasé en fonction de la vitesse du rotor, et de paramètres de rejet des bruits de mesure et des écarts issus d'un quatrième moyen de détermination desdits paramètres,
un cinquième moyen de détermination (16) de la position du rotor en fonction des flux statoriques dans le repère diphasé, des courants statoriques dans le repère diphasé et de l'inductance équivalente.

6. Système d'estimation selon la revendication 5, dans lequel, lorsque la machine électrique est de type synchrone, on fixe l'inductance équivalente égale à la composante quadratique de l'inductance du stator.

7. Système d'estimation selon la revendication 5, dans lequel, lorsque la machine électrique est de type asynchrone, un moyen de détermination détermine l'inductance équivalente en fonction de l'inductance mutuelle, de l'inductance statorique et de l'inductance rotorique.

8. Système d'estimation selon l'une quelconque des revendications 5 à 7 comprenant un sixième moyen de détermination (17) du couple électromagnétique en fonction des flux statoriques dans le repère diphasé et des courants statoriques dans le repère diphasé.


**Patentansprüche**

1. Verfahren zum Schätzen der Position und Geschwindigkeit des Rotors einer Wechselstrommaschine für ein Kraftfahrzeug, das die folgenden Schritte umfasst:

Messen der Statorströme der Maschine am Dreiphasen-Bezugspunkt und die Werte der Statorspannungen der Maschine am Dreiphasen-Bezugspunkt,
Bestimmen der Komponenten der Statorströme an einem Zweiphasen-Bezugspunkt in Abhängigkeit von den Statorströmen am Dreiphasen-Bezugspunkt durch eine Concordia-Transformation,
Bestimmen der Komponenten der Statorspannungen am Zweiphasen-Bezugspunkt in Abhängigkeit von den Statorspannungen am Dreiphasen-Bezugspunkt durch eine Concordia-Transformation,
Bestimmen der Geschwindigkeit des Rotors iterativ in Abhängigkeit von den Statorspannungen am Zweiphasen-Bezugspunkt und von Einstellparametern,
Bestimmen der Statorflüsse der Maschine am Zweiphasen-Bezugspunkt in Abhängigkeit von der Geschwindigkeit des Rotors und von Ausschlussparametern, wobei der Ausdruck eines Statorflusses auf einer Achse des Zweiphasen-Bezugspunkts durch einen Ausschlussparameter korrigiert wird, der vom Statorwiderstand, vom Statorstrom auf der anderen Achse des Zweiphasen-Bezugspunkts, von der Statorspannung auf dieser anderen Achse des Zweiphasen-Bezugspunkts und von einem Einstellparameter abhängig ist, und Bestimmen der Position des Rotors in Abhängigkeit von den Statorflüssen am Zweiphasen-Bezugspunkt, den Statorströmen am Zweiphasen-Bezugspunkts und der äquivalenten Induktivität.

2. Verfahren zum Schätzen nach Anspruch 1, wobei die äquivalente Induktivität als gleich der quadratischen Komponente der Induktivität des Stators festgelegt wird, wenn die elektrische Maschine vom synchronen Typ ist.

3. Verfahren zum Schätzen nach Anspruch 1, wobei die äquivalente Induktivität in Abhängigkeit von der gegenseitigen Induktivität, der Statorinduktivität und der Rotorinduktivität bestimmt wird, wenn die elektrische Maschine vom asynchronen Typ ist.

4. Verfahren zum Schätzen nach einem der vorhergehenden Ansprüche, wobei das elektromagnetische Drehmoment in Abhängigkeit von den Statorflüssen am Zweiphasen-Bezugspunkt und von den Statorströmen am Zweiphasen-Bezugspunkt bestimmt wird.

5. System zum Schätzen der Position und Geschwindigkeit des Rotors einer Wechselstrommaschine für ein Kraftfahrzeug, das umfasst:

ein erstes Mittel zum Bestimmen (11) der Komponenten der Statorströme an einem Zweiphasen-Bezugspunkt in Abhängigkeit von den Statorströmen am Dreiphasen-Bezugspunkt durch eine Concordia-Transformation, ein zweites Mittel zum Bestimmen (12) der Komponenten der Statorspannungen am Zweiphasen-Bezugspunkt in Abhängigkeit von den Statorspannungen am Dreiphasen-Bezugspunkt durch eine Concordia-Transformation, ein drittes Mittel zum Bestimmen (13) der Geschwindigkeit des Rotors in Abhängigkeit von den Statorspannungen am Zweiphasen-Bezugspunkt durch Iteration, ein Mittel zum Schätzen (15) der Statorflüsse am Zweiphasen-Bezugspunkt in Abhängigkeit von der Geschwindigkeit des Rotors und von Parametern zum Ausschließen von Messrauschen und Abweichungen, die aus einem vierten Mittel zum Bestimmen der Parameter stammen, wobei der Ausdruck eines Statorflusses auf einer Achse des Zweiphasen-Bezugspunkts durch einen Ausschlussparameter korrigiert wird, der vom Statorwiderstand, vom Statorstrom auf der anderen Achse des Zweiphasen-Bezugspunkts, von der Statorspannung auf dieser anderen Achse des Zweiphasen-Bezugspunkts und von einem Einstellparameter abhängig ist, ein fünftes Mittel zum Bestimmen (16) der Position des Rotors in Abhängigkeit von den Statorflüssen am Zweiphasen-Bezugspunkt, den Statorströmen am Zweiphasen-Bezugspunkt und der äquivalenten Induktivität.

6. System zum Schätzen nach Anspruch 5, wobei die äquivalente Induktivität als gleich der quadratischen Komponente der Induktivität des Stators festgelegt wird, wenn die elektrische Maschine vom synchronen Typ ist.

7. System zum Schätzen nach Anspruch 5, wobei ein Mittel zum Bestimmen die äquivalente Induktivität in Abhängigkeit von der gegenseitigen Induktivität, der Statorinduktivität und der Rotorinduktivität bestimmt, wenn die elektrische Maschine vom asynchronen Typ ist.

8. System zum Schätzen nach einem der Ansprüche 5 bis 7, das ein sechstes Mittel zum Bestimmen (17) des elektromagnetischen Drehmoments in Abhängigkeit von den Statorflüssen am Zweiphasen-Bezugspunkt und den Statorströmen am Zweiphasen-Bezugspunkt umfasst.

**Claims**

1. Method for estimating the position and the speed of the rotor of an alternating current machine for a motor vehicle, comprising the following steps:

the stator currents of the machine in the three-phase reference frame and the values of the stator voltages of the machine in the three-phase reference frame are measured, the components of the stator currents are determined in a two-phase reference frame as a function of the stator currents in the three-phase reference frame by Concordia transformation, the components of the stator voltages are determined in the two-phase reference frame as a function of the stator voltages in the three-phase reference frame by Concordia transformation,
the speed of the rotor is determined iteratively as a function of the stator voltages in the two-phase reference frame and of setting parameters,
the stator fluxes of the machine are determined in the two-phase reference frame as a function of the speed of the rotor and of rejection parameters, the expression of a stator flux on one axis of said two-phase reference frame being corrected using a rejection parameter that is a function of the stator resistance, of the stator current on the other axis of said two-phase reference frame, of the stator voltage on the other axis of said two-phase reference frame and of a setting parameter and the position of the rotor is determined as a function of the stator fluxes in the two-phase reference frame, of the stator currents in the two-phase reference frame and of the equivalent inductance.

2. Estimation method according to Claim 1, wherein, when the electric machine is of synchronous type, the equivalent inductance is set equal to the quadratic component of the inductance of the stator.

3. Estimation method according to Claim 1, wherein, when the electric machine is of asynchronous type, the equivalent inductance is determined as a function of the mutual inductance, of the stator inductance and of the rotor inductance.

4. Estimation method according to any one of the preceding claims, wherein the electromagnetic torque is determined as a function of the stator fluxes in the two-phase reference frame and of the stator currents in the two-phase reference frame.

5. System for estimating the position and the speed of the rotor of an alternating current machine for a motor vehicle, comprising:

a first determination means (11) for determining the components of the stator currents in a two-phase reference frame as a function of the stator currents in the three-phase reference frame by Concordia transformation,
a second determination means (12) for determining the components of the stator voltages in the two-phase reference frame as a function of the stator voltages in the three-phase reference frame by Concordia transformation,
a third determination means (13) for determining, by iteration, the speed of the rotor as a function of the stator voltages in the two-phase reference frame,
an estimating means (15) for estimating the stator fluxes in the two-phase reference frame as a function of the speed of the rotor, and of measurement noise and deviation rejection parameters deriving from a fourth determination means for determining said parameters, the expression of a stator flux on one axis of said two-phase reference frame being corrected using a rejection parameter that is a function of the stator resistance, of the stator current on the other axis of said two-phase reference frame, of the stator voltage on said other axis of said two-phase reference frame and of a setting parameter,
a fifth determination means (16) for determining the position of the rotor as a function of the stator fluxes in the two-phase reference frame, of the stator currents in the two-phase reference frame and of the equivalent inductance.

6. Estimation system according to the Claim 5, wherein, when the electric machine is of synchronous type, the equivalent inductance is set equal to the quadratic component of the inductance of the stator.

7. Estimation system according to Claim 5, wherein, when the electric machine is of asynchronous type, a determination means determines the equivalent inductance as a function of the mutual inductance, of the stator inductance and of the rotor inductance.

8. Estimation system according to any one of Claims 5 to 7, comprising a sixth determination means (17) for determining the electromagnetic torque as a function of the stator fluxes in the two-phase reference frame and of the stator currents in the two-phase reference frame.

# FIG.1

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130289934 A1
- US 20070194742 A1
- CN 102983806
- CN 102437813
- EP 3012962 A